# EUROPÄISCHE PATENTSCHRIFT

(11) **EP 3 830 410 B1**
(45) Veröffentlichungstag und Bekanntmachung des Hinweises auf die Patenterteilung: **18.05.2022**
(21) Anmeldenummer: 18748906.7
(22) Anmeldetag: 31.07.2018
(51) Int. Cl.: F03D 1/04, F03D 3/02, F03D 13/20, F03D 80/70

(54) **WINDENERGIEANLAGE**
WIND POWER PLANT
ÉOLIENNE

(43) Veröffentlichungstag der Anmeldung: 09.06.2021
(73) Patentinhaber: FlowGen Development & Management AG, 6300 Zug (CH)
(72) Erfinder: KÜSTER, Dirk, 8121 Benglen (CH)
(74) Vertreter: Schaad, Balass, Menzl & Partner AG
(86) Internationale Anmeldenummer: PCT/EP2018/070647
(87) Internationale Veröffentlichungsnummer: WO 2020/025106

(56) Entgegenhaltungen:
- WO-A1-2014/136032
- US-A- 4 720 640
- US-A1- 2011 140 454
- US-A1- 2013 266 429

## Beschreibung

Die Erfindung betrifft eine Windenergieanlage gemäss Anspruch 1.

Windenergieanlagen mit Mantelwindturbinen sind allgemein bekannt. Üblicherweise ist die Mantelwindturbine an einem eine Trägerlängsrichtung definierenden Träger, beispielsweise einem Turm oder einem Fachwerk, über ein Mantellagerelement um die Trägerlängsrichtung drehbar angeordnet. Dadurch lässt sich die Mantelwindturbine um die Trägerlängsrichtung in die jeweilige Windrichtung drehen, sodass der Propeller zum Antrieb eines elektrischen Generators optimal vom Wind beaufschlagt wird.

Eine Windenergieanlage mit einer besonders effektiven Mantelwindturbine ist in der älteren Patentanmeldung EP 17 197 490.0 offenbart. Eine weitere Windenergieanlage aus dem Stand der Technik ist aus US 4 720 640 A bekannt.

Es ist eine Aufgabe der vorliegenden Erfindung eine Windenergieanlage mit einer Mantelwindturbine zu schaffen, welche bei einfachen Aufbau optimal an windmässige und bauliche Gegebenheiten anpassbar ist.

Dies Aufgabe wir mit einer Windenergieanlage gemäss Anspruch 1 gelöst.

Bevorzugte Ausführungsformen der Windenergieanlage sind in den abhängigen Ansprüchen angegeben.

Die Mantelwindturbine der Windenergieanlage weist einen eine Längsachse definierenden, zur Längsachse wenigstens annähernd rotationssymmetrischen, ringförmigen Mantel auf, dessen radial innen liegende Oberseite einen Strömungskanal für den Wind begrenzt. Im Strömungskanal ist ein um die Längsachse drehbarer Propeller angeordnet, welcher einen elektrischen Generator antreibt. Dieser ist bevorzugt in Strömungsrichtung des Windes stromabwärts des Propellers angeordnet, wobei bevorzugt die Welle des Generators konzentrisch zur Längsachse angeordnet ist.

Die Windenergieanlage weist weiter eine Träger auf, welcher eine Trägerlängsrichtung definiert, wobei am Träger ein Mantellagerelement angeordnet ist. Der Mantel der Windturbine und somit die gesamte Windturbine ist am Mantellagerelement um eine quer zur Trägerlängsrichtung verlaufende Schwenkachse in unterschiedlichem Schwenklagen montierbar.

Mit der erfindungsgemässen Windenergieanlage ist die Möglichkeit geschaffen, eine einzige Mantelwindturbine oder mehrere Mantelwindturbinen an einem Träger anzuordnen, dessen Trägerlängsrichtung von der Vertikalen abweichen kann oder welcher anstelle einer geradlinigen Längsrichtung eine Biegung aufweist. Weiter ermöglicht die erfindungsgemässe Windenergieanlage die Mantelwindturbine auch in beispielsweise gebirgigem Gelände, wo der Wind nicht immer in horizontaler Richtung weht, optimal in den Wind auszurichten. Dementsprechend wird die Schwenklage gewählt.

Bevorzugt verläuft die Schwenkachse wenigstens annähernd rechtwinklig zur Trägerlängsrichtung. Dies ermöglicht eine einfache Konstruktion der Windenergieanlage.

Bevorzugt ist das Mantellagerelement in sich geschlossen wenigstens annähernd kreisringförmig ausgebildet, wobei es den Mantel der Windturbine bevorzugt mit einem Abstand umgreift. Einerseits gewährleistet dies eine sehr stabile Konstruktion und andererseits bietet das kreisringförmig ausgebildete Mantellagerelement die Möglichkeit, insbesondere auf der dem Träger abgewandten Seite, am Mantellagerelement eine Trägerverlängerung anzuordnen, welche ein bevorzugt gleich ausgebildetes weiteres Mantellagerelement trägt, an welchem eine bevorzugt gleich ausgebildete weitere Mantelwindturbine angeordnet ist.

Es ist jedoch auch denkbar, das Mantellagerelement wenigstens annähernd halbkreisringförmig oder mit zwei Profilträgern auszubilden, wobei dann die Schwenkachse bevorzugt durch die beiden Endbereiche des Mantellagerelements verläuft. Der Vollständigkeit halber sei erwähnt, dass auch hier die Möglichkeit besteht, am Mantellagerelement eine Trägerverlängerung anzuordnen, welche ihrerseits ein weiteres Mantellagerelement trägt, an welchem eine weiter Mantelwindturbine angeordnet ist.

Bevorzugt ist der Mantel und somit die Mantelwindturbine am Mantellagerelement schwenkbar angeordnet. Dies ermöglicht eine exakte Ausrichtung der Schwenklage an die Windverhältnisse.

Bevorzugt stehen vom Mantel beidseitig radial gegen aussen und zur Schenkachse konzentrisch Lagerstummel ab, welche in Lageelementen des Mantellagerelements gehalten sind. Dies ermöglicht eine einfache Konstruktion der Mantelwindturbine und insbesondere deren Mantels. Selbstverständlich ist auch die kinematische Umkehr möglich, nämlich die Lagerstummel am Mantellagerelement fest und die Lagerelemente am oder im Mantel anzuordnen.

Bevorzugt sind die Lagerelemente als Drehlager ausgebildet. Dabei besteht die Möglichkeit die Schwenklage mittels einer Feststelleinrichtung festzulegen; dies beispielsweise durch die Ausbildung des Drehlagers als Klemmlager. Es ist jedoch auch möglich, einen Schwenkantrieb vorzusehen, um die im Drehlager frei drehbar gelagerten Lagestummel und somit den Mantel und die gesamte Mantelwindturbine um die Schwenkachse zu schwenken. Die erst genannte Möglichkeit bietet eine einfache Konstruktion und die zweite Möglichkeit bietet eine optimale Anpassung an unterschiedliche Windverhältnisse.

Bevorzugt ist das Mantellagerelement am Träger um die Trägerlängsrichtung beim Mantellagerelement in unterschiedlichen Drehlagen montierbar. Dies ermöglicht dieselben Bauteile zu verwenden, auch wenn die Längsrichtung des Trägers von der Vertikalen abweicht oder gebogen ausgebildet ist.

Bevorzugt ist das Mantellagerelement am Träger um die Trägerlängsrichtung drehbar angeordnet; die Trägerlängsrichtung beim Mantellagerelement bildet dann die Drehachse. Dies ermöglicht eine Art kardanische Aufhängung des Mantels und somit der Mantelwindturbine, wobei diese optimal und auf einfache Weise allen Windgegebenheiten angepasste werden kann, beispielsweise auch an Fallwinde.

Bevorzugt ist das Mantellagerelement am Träger fest angeordnet, wobei der Träger um eine Drehachse drehbar ist; die Drehachse kann mit der Trägerlängsrichtung zusammenfallen. Auch mit dieser Ausführungsform ist die Richtung der Längsachse der Mantelwindturbine optimal an die Windverhältnisse anpassbar.

Die erfindungsgemässe Windenergieanlage bietet auch die Möglichkeit, dass mindestens zwei portalartig miteinander verbundene Träger, welche je wenigstens mit einem eine Mantelwindturbine tragenden Mantellagerelement ausgestattet sind, um eine Drehachse zu drehen. In diesem Fall befindet sich die Drehachse bevorzugt wenigstens annähernd mittig zwischen den Trägern und verläuft sie wenigstens annähernd in vertikaler Richtung. Bevorzugt sind drei Träger portalartig miteinander verbunden. Die portalartige Verbindung ist vorzugsweise durch Portalverlängerungen gebildet, welche bevorzugt an dem gegebenenfalls jeweils obersten Manteltragelement auf der dem jeweiligen Träger abgewandten Seite befestigt sind. Auf diese Art und Weise ist es möglich, auf kleinem Raum mit einer einfachen und stabilen Konstruktion mehrere Mantelwindturbinen zu betreiben.

Die Möglichkeit, die Mantellagerelemente an den Trägern und gegebenenfalls Trägerverlängerungen in unterschiedlichen Drehlagen sowie die Mäntel der Mantelwindturbinen in unterschiedlichen Schwenklagen an den Mantellagerelementen zu befestigen, ermöglichte es, alle Mantelwindturbinen auf eichfache Art und Weise parallel zueinander auszurichten.

Bevorzugt sind die Träger auf Rollfüssen angeordnet. Die Fahrbahn oder Fahrschiene, auf welcher die Rollfüsse rollen, verläuft in diesem Fall kreisförmig und zentrisch zur Drehachse. Dies ermöglicht die gemeinsame Ausrichtung sämtlicher Mantelwindturbinen in Windrichtung.

Bevorzugt weist der Mantel der Mantelwindturbine den Querschnitt eines bikonvexen Flügelprofils auf. Dabei weist die radial aussen liegende Unterseite des Mantels bevorzugt wenigstens annähernd die Form des Mantels einer Kugelschicht auf, welche bevorzugt wenigstens annährend symmetrisch zu einer rechtwinklig zur Längsachse verlaufenden Symmetrieebene, in welcher die Schwenkachse liegt, ausgebildet ist. Diese Ausgestaltung ermöglicht eine hindernisfreie Anordnung der Mantelwindturbine in unterschiedlichen Schwenklagen.

Bevorzugt weist die Windenergieanlage eine Windturbine beziehungsweise mehrere Windturbinen auf, wie sie in der Anmeldung EP 17 197 490.0 offenbart ist. Die Offenbarung dieser europäischen Anmeldung ist durch Bezugnahme in die vorliegende Anmeldung integriert.

Dementsprechend weist die Windturbine bevorzugt weiter ein zur Längsachse wenigstens annähernd rotationssymmetrisches, ringförmiges Leitelement auf, dessen grösster Aussendurchmesser kleiner als die kleinste lichte Weite des Strömungskanals und dessen Leitprofilnase bezüglich der Profilnase des Mantels in Strömungsrichtung des Windes stromaufwärts und dessen Leitelementprofilhinterkante bezüglich der Profilnase stromabwärts und bezüglich der kleinsten lichten Weite des Strömungskanals stromaufwärts angeordnet ist. Der Propeller befindet sich, in Strömungsrichtung gesehen, wenigstens annähernd bei der Leitelementprofilhinterkante. Diese Ausgestaltung der Windturbine führt zu einem sehr guten Wirkungsgrad.

Bevorzugt weist der Propeller einen Durchmesser auf, welcher wenigstens annähernd der lichten Weite des Leitelements entspricht. Durch diese Massnahme wird der Propeller nur vom das Leitelement durchströmenden Haupt-Windstrom beaufschlagt während der zwischen dem Leitelement und dem Mantel hindurch strömende Mantelstrom zu einem Unterdruck stromabwärts des Propellers führt, was zu einem sehr guten Wirkungsgrad der Windturbine beiträgt.

Bevorzugt schneidet die Schwenkachse die Längsachse und bevorzugt verläuft die Schwenkachse wenigstens annähernd durch den Schwerpunkt der Mantelwindturbine.

Der Propeller weist bevorzugt einen Durchmesser zwischen 2,5 m und 6 m auf. Bei einem Propellerdurchmesser von 3,0 m kann die in Richtung der Längsachse gemessene Länge der Mantelwindturbine beispielsweise 2,4 m und die Länge des Mantels beispielsweise 2,2 m betragen. Entsprechend kann der Aussendurchmesser des Mantels bei 4,4 m und der Aussendurchmesser des Leitelements bei 3,1 m liegen. Die Mantelwindturbine kann jedoch bezüglich dieser Abmessung grösser oder kleiner ausgebildet werden.

Unter Durchmesser des Propellers ist bei einem Propeller mit einer ungeraden Anzahl von Blättern der doppelte Radius eines Blatts (von der Längsachse bis zum radial äusseren Ende des Blatts) zu verstehen.

Die Erfindung wird anhand in der Zeichnung dargestellten Ausführungsbeispielen näher erläutert. Es zeigen rein schematisch:
- Fig. 1: in Ansicht eine Windenergieanlage mit einem auf einem Fundament in vertikaler Richtung stehenden Träger und einem am oberen Ende des Trägers angeordneten Mantellagerelement, an welchem eine Mantelwindturbine mit ihrem Mantel um eine in Horizontalrichtung verlaufende Schwenkachse schwenkbar angeordnet ist;
- Fig. 2: gegenüber Fig. 1 vergrössert einen in Fig. 1 mit II bezeichneten Ausschnitt der Windenergieanlage;
- Fig. 3: in perspektivischer Darstellung eine bevorzugte Ausführungsform der Mantelwindturbine;
- Fig. 4: in Ansicht einen Teil einer Windenergieanlage, bei welcher der Träger auf einem Rollfuss angeordnet ist und ein kreisringförmiges Mantellagerelement trägt, an welchem eine Mantelwindturbine um eine in horizontaler Richtung verlaufende Schwenkachse schwenkbar gelagert ist, wobei am Mantellagerelement eine Trägerverlängerung befestigt ist, welche ihrerseits dazu bestimmt ist, ein gleich ausgebildetes Mantellagerelement zu tragen, an welchem eine weitere Windturbine um ihre in horizontaler Richtung verlaufende Schwenkachse schwenkbar angeordnet ist;
- Fig. 5: in gleicher Darstellung wie Fig. 4, jedoch verkleinert, den dort gezeigten Teil der Windenergieanlage mit einer um die Schwenkachse nach unten geschwenkten Mantelwindturbine;
- Fig. 6: in gleicher Darstellung wie Fig. 5 die Windenergieanlage mit um die Schwenkachse nach oben geschwenkter Mantelwindturbine,
- Fig. 7: in gleicher Darstellung wie Fig. 5 und 6 die Windenergieanlage mit um die Trägerlängsrichtung im Uhrzeigersinn gedrehtem Mantellageelement mit der Mantelwindturbine;
- Fig. 8: in gleicher Darstellung wie Fig. 7 die Windenergieanlage jedoch mit bezüglich den Fig. 5 und 6 im Gegenuhrzeigersinn um die Trägerlängsrichtung gedrehtem Mantellagerelement mit der Mantelwindturbine;
- Fig. 9: in Ansicht eine Windenergieanlage mit drei auf je einem Rollfuss angeordneten Trägern, Trägerverlängerungen und je vier in Mantellängsrichtung übereinander angeordneten Mantellagerelementen mit je einer Mantelwindturbine, wobei die drei Träger portalartig miteinander verbunden sind;
- Fig. 10: in Seitenansicht und gegenüber Fig. 9 verkleinert die dort gezeigte Ausführungsform der Windenergieanlage; und
- Fig. 11: in Draufsicht die in den Fig. 9 und 10 gezeigte Ausführungsform der Windenergieanlage.

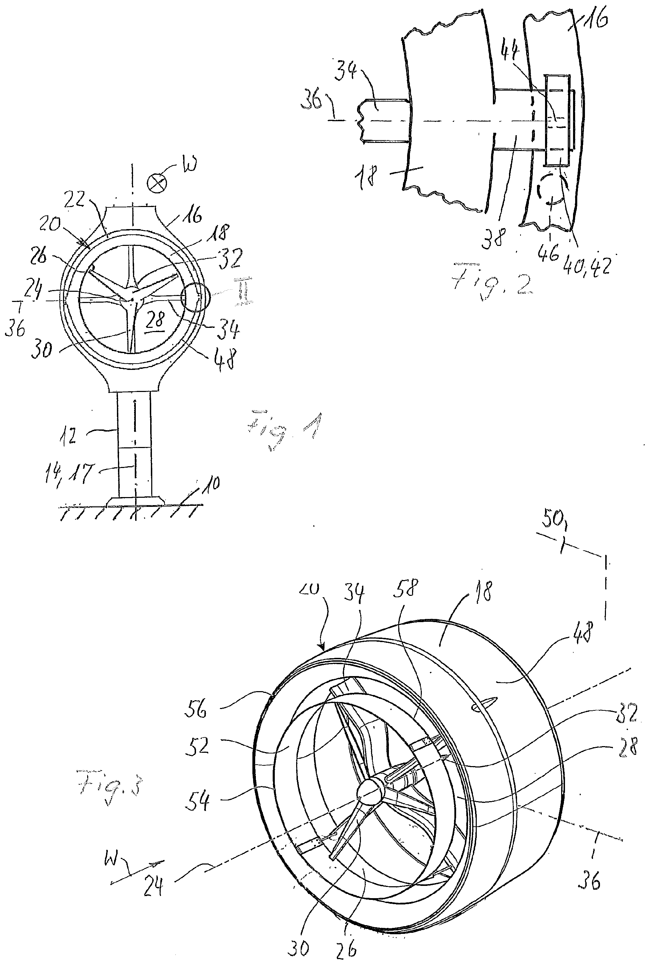

Die in der Fig. 1 gezeigte Ausführungsform der Windenergieanlage weist einen rohrförmigen, geradlinigen, auf einem Fundament 10 befestigten Träger 12 auf, welcher somit eine in vertikaler Richtung verlaufende Trägerlängsrichtung 14 definiert. Auf dem oberen Ende des Trägers 12 sitzt ein kreisringförmig und in sich geschlossen ausgebildetes Mantellagerelement 16. Das Mantellagerelement 16 ist am Träger 12 um eine mit der Trägerlängsrichtung 14 zusammenfallende Drehachse 17 drehbar gelagert.

Das Mantellagerelement 16 definiert durch seine Kreisringform eine Achse, welche rechtwinklig zur Trägerlängsrichtung verläuft; es ist somit stehend auf dem Träger 12 angeordnet.

Das Mantellagerelement 16 umfasst den Mantel 18 einer Mantelwindturbine 20, wobei zwischen dem Mantel 18 und dem Mantellagerelement 16 ein Luftspalt 22 vorgesehen ist. Der Mantel 18 definiert eine Längsachse 24, zu welcher er rotationssymmetrisch und in sich geschlossen ausgebildet ist. Die radial innen liegende Oberseite 26 des Mantels 18 begrenzt einen Strömungskanal 28, in welchem ein hier dreiblättriger Propeller 30 angeordnet ist. Dieser wird vom durch den Strömungskanal 28 in Strömungsrichtung W strömenden Wind beaufschlagt, wodurch er um die Längsachse 24 in Drehung versetzt wird und einen gleichachsig und stromabwärts angeordneten Generator 32 zur Erzeugung elektrischer Energie in Drehung versetzt.

Der Generator 32 und die Welle des Propellers 30 sind über kreuzartig angeordnete Generatorträger 34 am Mantel 18 abgestützt. Der Mantel 18 weist bevorzugt ein bikonvexes Flügelprofil auf um die Geschwindigkeit des Windes im Strömungskanal 28 zu erhöhen und möglichst Turbulenzen zu vermeiden.

Der Mantel 18 und somit die Mantelwindturbine 20 ist am Mantellagerelement 16 um eine Schwenkachse 36 schwenkbar gelagert, welche im gezeigten Ausführungsbeispiel horizontal und somit rechtwinklig zur Trägerlängsrichtung 14 verläuft.

Zu diesem Zweck stehen, wie dies in Fig. 2 dargestellt ist, vom Mantel 18 beidseitig radial gegen aussen und konzentrisch zur Schwenkachse 36 am Mantel 18 befestigte Lagerstummel 38 ab, welche in als Drehlager 40 ausgebildeten Lagerelementen 42 im Mantellagerelement 16 aufgenommen sind.

Im gezeigten Ausführungsbeispiel sind die Drehlager 40 gleichzeitig als Klemmlager ausgebildet, um bei festgelegter Schwenklage des Mantels 18 eine Feststelleinrichtung 44 zu bilden und den Mantel 18 und somit die Mantelwindturbine 20 in dieser Schwenklage zu halten.

Es ist jedoch auch möglich, wie dies gestrichelt in Fig. 2 dargestellt ist, im Mantellagerelement 16 einen Schwenkantrieb 46 vorzusehen, um die an den Drehlagern 40 frei drehbar gelagerten Lagerstummel 38 und somit die Mantelwindturbine 20 um die Schwenkachse 36 in die gewünschte Schwenklage zu drehen und dort festzuhalten.

Bevorzugt verläuft die Schwenkachse 36 durch den Schwerpunkt der Mantelwindturbine 20.

Die Mantelwindturbine 20 ist somit kardanartig sowohl um die in vertikaler Richtung verlaufende Drehachse 17 als auch um die in horizontaler Richtung verlaufende Schwenkachse 36 entgegen der Strömungsrichtung W des Windes ausrichtbar um den Propeller 30 optimal vom Wind beaufschlagen zu lassen.

Durch diese Art der Aufhängung der Mantelwindturbine 20 lassen sich auch an Orten, wo der Wind nicht oder nicht immer in horizontaler Richtung bläst, die Mantelwindturbine 20 optimal ausrichten. Es ist auch möglich, das Mantellagerelement 16 am Träger 12 fest anzuordnen und diesem zusammen mit dem Träger 12 relativ zum Fundament 10 um die Drehachse 17 zu drehen.

Es ist auch denkbar, das Mantellagerelement 16 bezüglich dem Fundament 10 fest anzuordnen; dies beispielsweise bei in relativ engen Tälern angeordneten Windenergieanlagen, in welchen der Wind praktisch immer in derselben Richtung bläst.

Fig. 3 zeigt in perspektivischer Darstellung eine weitere bevorzugte Ausführungsform der Mantelwindturbine 20 für die Windenergieanlage. Diese Ausführungsform der Mantelwindturbine 20 ist in der Anmeldung EP 17 197 490.0 ausführlich beschrieben und gezeigt; die Offenbarung dieser EP-Anmeldung gilt durch Referenzname als in die vorliegende Offenbarung aufgenommen.

Der Mantel 18 der in der Fig. 3 gezeigten Mantelwindturbine 20 ist kreisringförmig in sich geschlossen und zur Längsachse 24 rotationssymmetrisch ausgebildet. Der Querschnitt des Mantels 18 weist eine bikonvexe Form auf, wobei die radial innen liegende Oberseite 26 den Strömungskanal 28 begrenzt. Die radial aussen liegende Unterseite 48 des Mantels 18 der Mantelwindturbine 20 gemäss Fig. 3 als auch der Ausführungsform gemäss den Fig.1 und 2 weist bevorzugt die Form des Mantels einer Kugelschicht auf, wobei diese symmetrisch zu einer rechtwinklig zur Längsachse 24 verlaufenden Symmetrieebene 50, in welcher die Schwenkachse 36 liegt, ausgebildet ist.

Die in Fig. 3 nicht gezeigten Lagerstummel 38 stehen vom Mantel 18 beidseitig in radialer Richtung gegen aussen ab und sind konzentrisch zur Schwenkachse 36 ausgebildet. Die Mantelwindturbine gemäss Fig. 3 weist weiter ein zur Längsachse 24 rotationssymmetrisches, ringförmiges, in sich geschlossenes Leitelement 52 auf, dessen grösster Aussendurchmesser kleiner ist als die kleinste lichte Weite des Strömungskanals 28 und dessen Leitprofilnase 54 bezüglich der Profilnase 56 des Mantels 18, in Strömungsrichtung W des Windes gesehen, stromaufwärts angeordnet ist. Die Leitelementprofilhinterkante 58 des Leitelements 52 ist bezüglich der Profilnase 56 stromabwärts und bezüglich der kleinsten lichten Weite des Strömungskanals 28 stromaufwärts angeordnet. Der um die Längsachse 24 drehbare Propeller befindet sich, in Strömungsrichtung W gesehen, wenigstens annähernd bei der Leitelementprofilhinterkante 58. Der Durchmesser des Propellers 30 entspricht bevorzugt wenigstens annähernd der lichten Weite des Leitelements 52. Bevorzugt sind der Durchmesser des Propellers 30 (geringfügig) kleiner als der Durchmesser des Leitelements 52 und befinden sich die radial äusseren Enden der Blätter des Propellers 30 in Strömungsrichtung W (geringfügig) stromaufwärts der Leitelementprofilhinterkante 58.

Der Propeller 30 ist mit dem Generator 32 verbunden, welcher koaxial zur Längsachse 24 angeordnet ist und über die Generatorträger 34 am Mantel 18 befestigt ist.

Der Vollständigkeit halber sei erwähnt, dass die Ausführungsform der Mantelwindturbine 20 gemäss Fig. 3 anstelle der in den Fig. 1 und 2 sowie 4 bis 11 gezeigten Ausführungsform der Mantelwindturbine 20 treten kann.

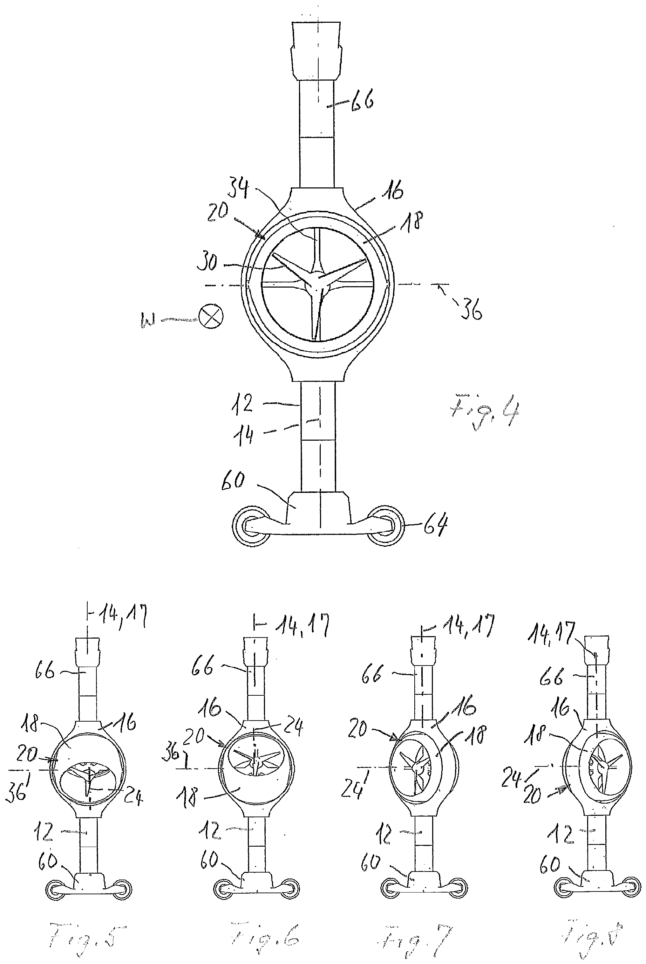

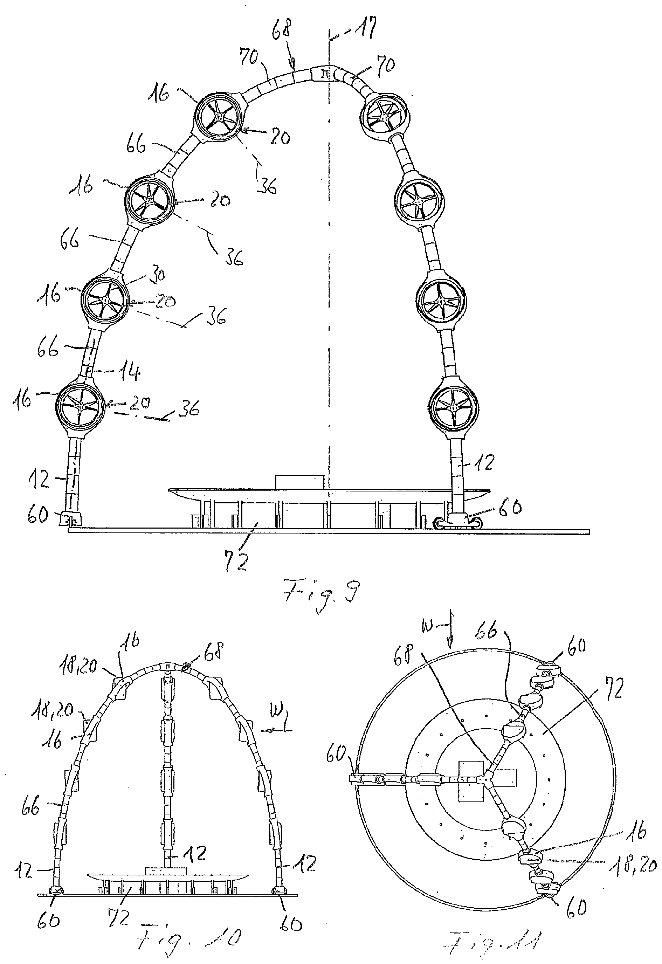

Bei der in den Fig. 4 bis 8 gezeigten Ausführungsform der Windenergieanlage sind der Träger 12, das Mantellagerelement 16 und die Mantelwindturbine 20 gleich ausgebildet wie im Zusammenhang mit den Fig. 1 und 2 erläutert. Der Träger 12 ist jedoch nicht auf einem Fundament 10 befestigt, sondern er steht auf einem Rollfuss 60 mit zwei an einem Chassis 62 gelagerten Fahrrollen 64. Der Zweck und die Funktionsweise dieser Ausführungsform ist im Zusammenhang mit den Fig. 9 bis 11 näher zu erläutern.

Am Mantellagerelement 16 ist auf der dem Träger 12 abgewandten Seite eine hier ebenfalls rohrförmig ausgebildete Trägerverlängerung 66 befestigt. Das obere Ende der Trägerverlängerung 66 ist dazu bestimmt, ein weiteres Mantellagerelement 16 zu tragen, an welchem eine weitere Mantelwindturbine 20, wie im Zusammenhang mit den Fig. 1 und 2 erläutert, um ihre Schwenkachse 36 in die gewünschte Schwenklage bringbar aufgenommen ist.

Auch bei der Ausführungsform gemäss Fig. 1 ist das entsprechende Anbringen einer Trägerverlängerung 66 zum Tragen eines weiteren Mantellagerelements 16 mit einer weitere Mantelwindturbine 20 möglich.

In Fig. 5 ist der Mantel 18 und somit die Mantelwindturbine 20 um die Schwenkachse 36 in Richtung schräg nach unten verschwenkt gezeigt, bei welcher die Längsachse 24, in Strömungsrichtung W des Windes gesehen, ansteigt. Während bei der in der Fig. 6 gezeigten Schwenklage der Mantel 18 und somit die Mantelwindturbine 20 in einer gegen schräg oben gerichteten Schwenklage sich befindet und die Längsachse 24, in Strömungsrichtung W des Windes gesehen, mit Gefälle verläuft.

Wie dies die Fig. 7 und 8 zeigen, ist das Mantellagerelement 16 am Träger 12 um die Trägerlängsrichtung 14 drehbar angeordnet. In Fig. 7 ist das Mantellagerelement 16 und somit die Mantelwindturbine 20, in Draufsicht gesehen, gegenüber der Drehlage gemäss den Fig. 4, 5 und 6 im Uhrzeigersinn und Fig. 8 im Gegenuhrzeigersinn gedreht.

Es ist möglich, zwischen den Träger 12 und dem Mangellagerelement 16 einen Drehantrieb vorzusehen. Bevorzugt ist jedoch, insbesondere im Zusammenhang mit der Ausführungsform gemäss den Fig. 9 bis 11, eine Drehlagerung zwischen dem Träger 12 und dem Mantellagerelement 16 vorhanden, um die gewünschte Drehlage einzustellen und dann zu fixieren. Dasselbe trifft zu für die Lagerelemente 42, um die Schwenklage jeder Mantelwindturbine 20 festzulegen.

Die Fig. 9 bis 11 zeigen eine Windenergieanlage, bei welcher drei je auf einem Rollfuss 60 angeordnete Träger 12 über je vier Mantellagerelemente 16, wobei zwischen diesen jeweils eine Trägerverlängerung 16 verläuft, portalartig miteinander verbunden sind. Zu dem jeweils obersten Mantellagerelement 16 verläuft je ein Arm 70 eines dreiarmigen Portalträgerelements 70. Die jedem der Träger 12 zugeordneten Trägerverlängerung 66 und der zugeordnete Arm 70 des Portalträgers 86 verlaufen mit ihrer Längsrichtung 14 in einer zugeordneten Vertikalebene, wobei die drei Vertikalebenen um 120° zueinander versetzt sind.

Durch das Zentrum des Portalträgers 68 verläuft die in vertikaler Richtung verlaufende Drehachse 17, um welche die Windenergieanlage aufgrund der Rollfüsse 60 drehbar ist.

Weiter sind in der in den Fig. 9 bis 12 gezeigten Ausführungsform der Windenergieanlage sowohl die Träger 12 als auch die Trägerverlängerungen 66 und die Arme 70 des Portalträgers 68 gebogen ausgebildet; beispielsweise bildet die jeweils in der betreffenden Vertikalebene verlaufende Trägerlängsrichtung 14 und Längsrichtung der Trägerverlängerungen und des zugeordneten Arms 70 die Form des Viertels einer stehenden Ellipse.

Alle Mantellagerelemente 16 und die von diesen getragenen Mantelwindturbinen 20 sind identisch ausgebildet. Wie dies insbesondere den Fig. 10 und 11 entnehmbar ist, sind dank der Schwenklagerung der Mantelwindturbinen 20 und der Drehlagerung der Mantellagerelemente 16 alle Mäntel 18 und somit Mantelwindturbine 20 derart ausrichtbar, dass die Längsachsen 24 parallel zueinander verlaufen; im gezeigten Ausführungsbeispiel in horizontaler Richtung. Weiter sind, infolge der Drehbarkeit der Windenergieanlage um die vertikale Drehachse 17, alle Mantelwindturbinen 20 gemeinsam auf einfache Art und Weise entgegen die Strömungsrichtung W des Windes drehbar.

Selbstverständlich ist es auch denkbar, nur zwei Träger mit diesen zugeordneten Mantelwindturbinen 20 portalartig miteinander zu verbinden. Weiter ist auch möglich, die Träger 12 und gegebenenfalls Trägerverlängerungen 66 geradlinig und in Linie übereinander auszubilden und einen beispielsweise in horizontaler Richtung verlaufenden Portalträgerelement vorzusehen, an welchem wiederum Mantellagerelemente 16 mit je einer Mantelwindturbine 20 vorgesehen sein können.

Der Vollständigkeit halber sei erwähnt, dass die elektrischen Leitungen von und zu den Generatoren 32 durch einen der Lagerstummel 38, die Mantellagerelemente 16, falls vorhanden die Trägerverlängerungen 66 und die Träger 12 zu einer beispielsweise in einem Gebäude 72 angeordneten elektrischen Umformeinrichtung und gegebenenfalls Speichereinrichtung verlaufen.

## Patentansprüche

1. Windenergieanlage mit einer Mantelwindturbine (20), welche einen eine Längsachse (24) definierenden, zur Längsachse (24) wenigstens annähernd rotationssymmetrischen, ringförmigen Mantel (18), dessen radial innenliegende Oberseite (26) einen Strömungskanal (28) für den Wind begrenzt, und einen im Strömungskanal (28) angeordneten, um die Längsachse (24) drehbaren, vom Wind angeströmten Propeller (30) zum Antrieb eines elektrischen Generators (32) aufweist, mit einem eine Trägerlängsrichtung (14) definierenden Träger (12) und mit einem am Träger (12) angeordneten Mantellagerelement (16), wobei der Mantel (18) der Mantelwindturbine (20) am Mantellagerelement (16) um eine quer zur Trägerlängsrichtung (14) verlaufende Schwenkachse (36) in unterschiedlichen Schwenklagen montierbar ist, wobei die Schwenkachse (36) wenigstens annähernd rechtwinklig zur Trägerlängsrichtung (14) verläuft, der Mantel (18) am Mantellagerelement (16) schwenkbar angeordnet ist, **dadurch gekennzeichnet, dass** das Mantellagerelement (16) wenigstens annähernd kreisringförmig ausgebildet ist und den Mantel (18) der Mantelwindturbine (18) mit einem Abstand umgreift, und dass am Mantellagerelement (16), auf der dem Träger (12) abgewandten Seite, eine Trägerverlängerung (66) angeordnet ist, welche ein weiters Mantellagerelement (16) trägt, an welchem eine weitere Mantelwindturbine (20) angeordnet ist.

2. Windenergieanlage nach Anspruch 1 , **dadurch gekennzeichnet, dass** vom Mantel (18) beidseitig radial gegen aussen und zur Schwenkachse (36) konzentrisch Lagerstummel (38) abstehen, welche in Lagerelementen (42) des Mantellagerelements (16) gehalten sind.

3. Windenergieanlage nach Anspruch 1 oder 2, **dadurch gekennzeichnet, dass** die Lagerelemente (42) als Drehlager (40) ausgebildet sind, wobei sie eine Feststelleinrichtung (44) zum Festlegen der Schwenklage aufweist oder ein Schwenkantrieb (46) zum Schwenken des Mantels (18) vorhanden ist.

4. Windenergieanlage nach einem der Ansprüche 1 bis 3, **dadurch gekennzeichnet, dass** das Mantellagerelement (16) am Träger (12) um die Trägerlängsrichtung (14) in unterschiedlichen Drehlagen montierbar oder um die Trägerlängsrichtung (14) drehbar angeordnet ist.

5. Windenergieanlage nach einem der Ansprüche 1 bis 4, **dadurch gekennzeichnet, dass** das Mantellagerelement (16) am Träger (12) fest angeordnet ist und der Träger (12) um eine Drehachse (17) drehbar ist.

6. Windenergieanlage nach Anspruch 5, **gekennzeichnet durch** mindestens zwei, vorzugsweise drei portalartig miteinander verbundene Träger (12) mit je wenigstens einem eine Mantelwindturbine (20) tragenden Mantellagerelement (16), wobei die Drehachse (17) wenigstens annähernd mittig zwischen den Trägern (12) wenigstens annähernd in vertikaler Richtung verläuft.

7. Windenergieanlage nach Anspruch 6, **dadurch gekennzeichnet, dass** die Träger (12) auf Rollfüssen (60) angeordnet sind.

8. Windenergieanlage nach einem der Ansprüche 1 bis 7, **dadurch gekennzeichnet, dass** der Mantel (18) der Mantelwindturbine (20) den Querschnitt eines bikonvexen Flügelprofils aufweist, wobei bevorzugt die radial aussenliegende Unterseite (48) wenigstens annähernd die Form des Mantels einer Kugelschicht aufweist, wobei diese bevorzugt wenigstens annähernd symmetrisch zu einer rechtwinklig zur Längsachse (24) verlaufenden Symmetrieebene (50), in welche die Schwenkachse (36) liegt, ausgebildet ist.

9. Windenergieanlage nach einem der Ansprüche 1 bis 8, **dadurch gekennzeichnet, dass** die Mantelwindturbine (20) ein zur Längsachse (24) wenigstens annähernd rotationssymmetrisches, ringförmiges Leitelement (52) aufweist, dessen grösster Aussendurchmesser kleiner als die kleinste lichte Weite des Strömungskanals (28) und dessen Leitelementprofilnase (54) bezüglich der Profilnase (56) des Mantels (18), in Strömungsrichtung (W) des Windes, stromaufwärts und dessen Leitelementprofilhinterkante (58) bezüglich der Profilnase (56) stromabwärts und bezüglich der kleinsten lichten Weite des Strömungskanals (28) stromaufwärts angeordnet ist, und sich der Propeller (30), in Strömungsrichtung (W) gesehen, wenigstens annähernd bei der Leitelementprofilhinterkante (58) befindet.

10. Windenergieanlage nach Anspruch 9, **dadurch kennzeichnet, dass** der Propeller (30) einen Durchmesser aufweist, welcher wenigsten annähernd der lichten Weite des Leitelements (52) entspricht.

## Claims

1. Wind turbine having a shrouded wind turbine (20) which has an annular shroud (18) that defines a longitudinal axis (24) and is at least approximately rotationally symmetric with respect to the longitudinal axis (24), the radially inner top side (26) of this shroud bounding a flow duct (28) for the wind, the wind turbine also having arranged in the flow duct (28) a propeller (30) upon which the wind is incident, which is rotatable about the longitudinal axis (24) and which serves for driving an electrical generator (32), with a support (12) defining a support longitudinal direction (14) and with a shroud mounting element (16) arranged on the support (12), wherein the shroud (18) of the shrouded wind turbine (20) can be mounted on the shroud mounting element (16) in various pivoting positions around a pivot axis (36) running transversely to the support longitudinal direction (14), wherein the pivot axis (36) runs at least approximately at right angles to the support longitudinal direction (14), the shroud (18) is arranged pivotably on the shroud mounting element (16), **characterized in that** the shroud mounting element (16) is at least approximately in the shape of a circular ring and surrounds the shroud (18) of the shrouded wind turbine (18) with a gap, and **in that** on the shroud mounting element (16), on the side facing away from the support (12), there is arranged a support extension (66) that bears a further shroud mounting element (16) having arranged on it a further shrouded wind turbine (20).

2. Wind turbine according to Claim 1, **characterized in that** the shroud (18) has, projecting radially outwards from it and concentrically with respect to the axis (36), mounting stubs (38) that are held in mounting elements (42) of the shroud mounting element (16) .

3. Wind turbine according to Claim 1 or 2, **characterized in that** the mounting elements (42) are designed as rotary bearings (40), having a fixing device (44) for fixing the pivoting position, or there is a pivoting drive (46) for pivoting the shroud (18).

4. Wind turbine according to one of Claims 1 to 3, **characterized in that** the shroud mounting element (16) is arranged on the support (12) in such a way that it can be mounted in various rotary positions around the support longitudinal direction (14), or such that it can be rotated about the support longitudinal direction (14).

5. Wind turbine according to one of Claims 1 to 4, **characterized in that** the shroud mounting element (16) is securely arranged on the support (12) and the support (12) can be rotated about an axis of rotation (17) .

6. Wind turbine according to Claim 5, **characterized by** at least two, preferably three supports (12) connected to one another in the manner of a portal, each having at least one shroud mounting element (16) supporting a shrouded wind turbine (20), wherein the axis of rotation (17) runs at least approximately in the vertical direction, at least approximately centrally between the supports (12).

7. Wind turbine according to Claim 6, **characterized in that** the supports (12) are arranged on wheeled bases (60) .

8. Wind turbine according to one of Claims 1 to 7, **characterized in that** the shroud (18) of the shrouded wind turbine (20) has the cross section of a biconvex wing profile, wherein preferably the radially outer underside (48) is at least approximately in the shape of the outer surface of a spherical layer, this preferably being at least approximately symmetric with respect to a plane of symmetry (50) which runs at right angles to the longitudinal axis (24) and in which the pivot axis (36) lies.

9. Wind turbine according to one of Claims 1 to 8, **characterized in that** the shrouded wind turbine (20) has an annular guide element (52) which is at least approximately rotationally symmetric with respect to the longitudinal axis (24) and whose largest outer diameter is smaller than the smallest free width of the flow duct (28) and whose guide element leading edge (54) is arranged upstream of the leading edge (56) of the shroud (18), in the wind flow direction (W), and whose guide element trailing edge (58) is downstream of the leading edge (56) and upstream of the smallest free width of the flow duct (28), and the propeller (30), when viewed in the flow direction (W), is located at least approximately at the guide element trailing edge (58).

10. Wind turbine according to Claim 9, **characterized in that** the propeller (30) has a diameter which corresponds at least approximately to the free width of the guide element (52).

## Revendications

1. Éolienne comportant une turbine éolienne carénée (20), laquelle comprend un carénage annulaire (18) définissant un axe longitudinal (24), au moins approximativement à symétrie de révolution par rapport à l'axe longitudinal (24), carénage dont le côté supérieur (26) radialement intérieur limite un canal d'écoulement (28) pour le vent, et une hélice (30) disposée dans le canal d'écoulement (28), pouvant tourner autour de l'axe longitudinal (24) et sur laquelle souffle le vent, pour l'entraînement d'un générateur électrique (32), comportant un support (12) définissant une direction longitudinale de support (14) et comportant un élément de palier de carénage (16) disposé sur le support (12), le carénage (18) de la turbine éolienne carénée (20) pouvant être monté sur l'élément de palier de carénage (16) dans différentes positions de pivotement autour d'un axe de pivotement (36) s'étendant transversalement à la direction longitudinale de support (14), l'axe de pivotement (36) s'étendant au moins approximativement perpendiculairement à la direction longitudinale de support (14), le carénage (18) étant disposé de manière pivotante sur l'élément de palier de carénage (16), **caractérisée en ce que** l'élément de palier de carénage (16) est réalisé au moins approximativement sous forme d'anneau circulaire et enveloppe la turbine éolienne carénée (18) à une distance, et **en ce qu'**un prolongement de support (66) est disposé sur l'élément de palier de carénage (16), sur le côté opposé au support (12), lequel prolongement supporte un autre élément de palier de carénage (16) sur lequel une autre turbine éolienne carénée (20) est disposée.

2. Éolienne selon la revendication 1, **caractérisée en ce que** des tourillons de palier (38) font saillie radialement vers l'extérieur à partir du carénage (18) des deux côtés et de manière concentrique à l'axe de pivotement (36), lesquels tourillons sont retenus dans des éléments de palier (42) de l'élément de palier de carénage (16).

3. Éolienne selon la revendication 1 ou 2, **caractérisée en ce que** les éléments de palier (42) sont réalisés sous forme de paliers de rotation (40), l'éolienne comprenant un dispositif de blocage (44) pour la fixation de la position de pivotement ou un entraînement de pivotement (46) pour le pivotement du carénage (18) étant présent.

4. Éolienne selon l'une des revendications 1 à 3, **caractérisée en ce que** l'élément de palier de carénage (16) peut être monté sur le support (12) dans différentes positions de rotation autour de la direction longitudinale de support (14) ou est disposé de manière à pouvoir tourner autour de la direction longitudinale de support (14).

5. Éolienne selon l'une des revendications 1 à 4, **caractérisée en ce que** l'élément de palier de carénage (16) est disposé fixement sur le support (12) et le support (12) peut tourner autour d'un axe de rotation (17).

6. Éolienne selon la revendication 5, **caractérisée par** au moins deux, de préférence trois supports (12) reliés les uns aux autres à la manière d'un portique, comportant respectivement au moins un élément de palier de carénage (16) supportant une turbine éolienne carénée (20), l'axe de rotation (17) s'étendant au moins approximativement centralement entre les supports (12) au moins approximativement dans la direction verticale.

7. Éolienne selon la revendication 6, **caractérisée en ce que** les supports (12) sont disposés sur des roulettes (60) .

8. Éolienne selon l'une des revendications 1 à 7, **caractérisée en ce que** le carénage (18) de la turbine éolienne carénée (20) présente la section transversale d'un profil d'aile biconvexe, le côté inférieur (48) situé radialement à l'extérieur présentant de préférence au moins approximativement la forme de l'enveloppe d'une couche sphérique, celle-ci étant réalisée de préférence au moins approximativement symétriquement par rapport à un plan de symétrie (50) s'étendant perpendiculairement à l'axe longitudinal (24), plan de symétrie dans lequel l'axe de pivotement (36) se situe.

9. Éolienne selon l'une des revendications 1 à 8, **caractérisée en ce que** la turbine éolienne carénée (20) comprend un élément de guidage (52) annulaire au moins approximativement à symétrie de révolution par rapport à l'axe longitudinal (24), élément de guidage dont le plus grand diamètre extérieur est inférieur au plus petit diamètre intérieur du canal d'écoulement (28) et dont le nez de profil d'élément de guidage (54) est disposé, par rapport au nez de profil (56) du carénage (18), en amont dans le sens d'écoulement (W) du vent, et dont le bord arrière de profil d'élément de guidage (58) est disposé en aval par rapport au nez de profil (56) et en amont par rapport au plus petit diamètre intérieur du canal d'écoulement (28), et l'hélice (30) se trouvant, vue dans le sens d'écoulement (W), au moins approximativement au niveau du bord arrière de profil d'élément de guidage (58) .

10. Éolienne selon la revendication 9, **caractérisée en ce que** l'hélice (30) présente un diamètre, lequel correspond au moins approximativement au diamètre intérieur de l'élément de guidage (52).
